# EUROPEAN PATENT APPLICATION

(11) **EP 3 324 573 A1**
(43) Date of publication of application: **23.05.2018**
(21) Application number: 16199574.1
(22) Date of filing: 18.11.2016
(51) Int. Cl.: H04L 9/32

(54) **DIGITAL CERTIFICATE VALIDATION**

(71) Applicant: IPCom GmbH & Co. KG, 82049 Pullach (DE)
(72) Inventor: LUFT, Achim, 38118 Braunschweig (DE); HANS, Martin, 31162 Bad Salzdetfurth (DE)
(74) Representative: Tomlinson, Edward James

(57) **Abstract**

The present invention provides a method of holding validation information concerning a digital certificate; the method comprising storing a digital certificate in a user equipment, performing a validation update from time to time, and storing a validation message generated by the validation update for presentation on demand, the validation message indicating whether the digital certificate is currently valid.

## Description

The present invention relates to a method for providing a digital certificate, in particular a driving licence on a user equipment, UE, device.

Most identity cards like driver's licences are print products. They may include electronically stored data (like biometric data) and require proprietary methods to read these data. On the other hand, completely digital certificates are well known. One example is the ITU-T standard X.509 for digital certificates. Digital certificates are simple to validate and could be transferred via all known digital communication methods. The combination of digital certificates with biometric data (e.g. fingerprint, picture) is known.

Digital certificates can be permanently or temporarily revoked. In order to revoke a certificate, the certification authority (CA) adds the certificate serial number to a revocation list (CRL) and digitally sign this list. The IETF standard RFC 6960 defines an Online Certificate Status Protocol (OCSP). A validating entity can request a revocation status of a specific digital certificate via OCSP. Optionally the response message can be signed. Possible status of a certification is "good", "revoked", or "unknown". In RFC 6960 "good" means not revoked only. Although the response is "good" a certificate might be expired. It is also possible that the validation request entities and the validating response entity agree on using the "good" status only for double-checked valid certificates.

US 8,549,318 B2 comprises user identification and authorization for operating a vehicle by biometric sensors. DE102014010752 A1 comprises (remote) operation authorized via a mobile device.

In an article titled "The driver's licence of the future is coming to your smartphone" (http://www.cnet.com/news/your-future-drivers-licence-could-go-digital/) published by CNET, the idea of replacing a physical driver's licence with a digital application on a smart phone is described. Benefits are explained including regular updates or synchronization of data with the Department of Motor Vehicles.

X.509 certification is a well known ITU standard for providing public key certificates developed under the IETF and is described in documents such as RFC5280 and RFC2560.

A physical driver's licence (like other identity cards) is a physical item that a person has to carry with him. It cannot be revoked remotely and it cannot be used to authorize reliably a driver to operate a vehicle.

New ideas currently arise to switch from physical licences to smart phone applications to represent a driver's licence. A digital certificate including validity period is used to ensure the integrity of the licence information. A certificate can be revoked; it will then appear on a revocation list which is available to validating parties. In order to validate a digital certificate, the validating party has to use a communication connection to frequently download the current revocation list or to request a validation online. Since such a validation has to be possible in rural areas without sufficient mobile network coverage or in foreign countries an offline validation would be beneficial. For devices that are very limited in their connectivity due to size, power or cost reasons like machine-type (MTC) device or some vehicles, it may not be possible to validate a certificate according to legacy mechanisms, i.e. requesting a fresh validation from the certification authority. Thus, these devices have to rely on a validation based on information prepared beforehand by the certificate owner / licence holder.

According to state of the art, to update the validity period of a certificate, the certificate has to be generated anew. This would require significant compute resources. Also, this would require to invalidate any older certificate and trigger any entity using older certificates to update theirs. Therefore, a method is required to re-testify a validity of a certificate in a secure way to ensure the validity status has not changed without affecting the actual certificate.

The legacy method for re-testifying is the Online Certificate Status Protocol (OCSP) described in RFC2560. The protocol is developed to be used by an entity verifying a certificate. This can only be done if a connection to a CA exists at the moment of verification. Thus, a method for securely adding re-testifying information to a certificate independent of the verification time instance and presenting it in a way that ensures information integrity to the verifying entity is required.

In addition, authorization to operate a vehicle should not depend on the identity of the driver only, but also on whether he is permitted to operate a specific vehicle or a class of vehicles at a given point in time.

The present invention provides a method of holding validation information concerning a digital certificate; the method comprising storing a digital certificate in a user equipment, performing a validation update from time to time, and storing a validation message generated by the validation update for presentation on demand, the validation message indicating whether the digital certificate is currently valid.

In a further aspect, the invention provides a method for determining a person's authorization to perform a task, the method comprising determining whether the person is in possession of a digital certificate relating to the task; and determining whether the person is in possession of a current validation message for the digital certificate.

The licence holding entity, such as a UE, may have a driver's licence as a digital certificate with biometric data of the driver, and assign the task to validate the driver's licence to the entity having the certificate stored. A request by this entity may periodically or opportunistically generate a validation report, or push a validation report periodically to this entity. The entity may present information from the validation report in addition to the digital certificate.

A validating entity may validate a certificate together with the date of its last validation from the information presented by a licence holding entity, and perform authorization to operate a vehicle depending on the driver's licence and its validation being renewed a sufficiently short time ago.

The driver's licence and its validation are only examples in this invention, other examples are, for example, a student card, revoked on ex-matriculation, general membership cards being revoked once membership ends unplanned, status cards (e.g. frequent flyer program cards), revoked when a particular status is terminated or replaced. Here the typical type of card (given for a year or two) may shift to an unterminated validity with the ability to revoke the card according to this invention.

By means of the present invention, the owner of a vehicle may be allowed to authorize a valid driver (or for other vehicles pilots or coxswains) depending on a valid driver's licence for this type of vehicle. The owner of a vehicle could be a private person to authorize or "whitelist" their family members, a company to whitelist their employees or a car sharing or a rental car company to authorize their customers.

A further benefit is that driver's licence validation may include the verification of a novel validation date that is independent of the validity period of the actual certificate of the licence and that can be verified against an individual requirement of freshness. That is, a police officer can accept a driver's licence whose last validation is 2 weeks ago while a rental car will require a 48-hour freshness of a driver's licence. Freshness in this sense does not correspond to the time of obtaining the licence or generating the respective certificate but only on re-validating the validity of the (unchanged) certificate.

A benefit of the invention is the possibility to check a presented validation message for validity and freshness instead of only validating the certificate (e.g. with help of a revocation list) is that it takes the burden of the validation from the validating entity to the presenter of the certificate.

The validation process is able to work in foreign countries or in rural areas without cellular network coverage. It is not dependent on any connectivity.

The invention also allows a regular and fairly simple validation update process. This entity performing the process can be separated from the entity generating the certificate. Also, there can by many more validation update entities than certificate authorities. The validation update entities would not need to have any user (driver) specific data or keys, thus it can be a very cheap and resource saving entity.

The validation procedure becomes important for certificates which are likely to be revoked. This is true for a driver's licence since in many countries the (temporary) revocation of the driver's licence is part of the jurisdiction.

An aim of the current invention is to enable a validation entity to validate digital certificate such as an identification document, for example a driver's licence, and further information contained therein. For the example of a driver's licence, the validating entity has to check four aspects of the electronic driver's licence:
Is the presented certificate valid?
   This includes the expiration dates and the digital signature of the certificate. In case asymmetric cryptography based certificates (e.g. X.509) are used, the validating entity needs the public key of the certificate authorisation (CA) in order to verify the digital signature.
Is the presented last validation message valid and sufficiently fresh?
   Again the digital signature can be verified with the public key of the CA or the validation update entity (if different from the CA). The validation message includes the time it has been generated. Is this time older than the preconfigured period of time? For example, the owner of a vehicle could have configured his vehicle in a way that it will deny any validation messages older than one week. There is no need for storing and updating a revocation list.
Is the certificate good for the current purpose?
   Another aspect the validating entity has to perform is the authorization of the driver. The driver's licence is valid for a list of vehicle types or classes. A driver might be authorized to drive cars and trucks but is not authorized to drive motorcycles. An electronic driver's licence could also be bound to a specific vehicle. The vehicle could contain a list (whitelist) of authorized drivers. For example, an owner of a car could configure the car with a list of valid drivers (licences); e.g. the members of his family. A car sharing company could remotely authorize the assigned driver of the shared car. A truck could be configured so that only drivers with a driver's licence applicable for trucks become authorized to start the engine. A police officer has to check whether the driver of a bus has a driver's licence that is applicable for busses. In any case the validating entity is at least able to check the authorization of a driver.
Is the user of the user device the licence holder and owner of the certificate?
   The user of the user device, e.g. the smart phone, has to prove he is the person referenced in the certificate presented by the device. The user can be authenticated via biometrics or password / PIN. Any form of two-factor-authentication is also possible.

Embodiments of the invention will now be described, by way of example only, with reference to the accompanying drawings in which:
Fig. 1 shows a message flow for an initial set up of a digital certificate;
Fig. 2 shows a flow chart for a polling validation update procedure;
Fig. 3 shows a message flow for polling periodic validation;
Fig. 4 shows a flow chart for a push validation update procedure;
Fig. 5 shows a message flow for periodic validation using a push procedure;
Fig. 6 shows a state chart for certificate states in a holding entity;
Fig. 7 shows a state chart for certificate states in a certification authority;
Fig. 8 shows a flow chart for presentation of a driving licence;
Fig. 9 shows a flow chart for validation of a driving licence;
Fig. 10 shows a message flow for a validation of a certificate;
Fig. 11 shows a further message flow for a validation of a certificate;
Fig. 12 shows an exemplary presentation of information on a UE screen; and
Fig. 13 shows an exemplary presentation of information on a UE screen in which the screen shows a two dimensional bar code validation.

The following scenario is typical for the implementation of the invention: A governmental department of motor vehicles (DMV) is a certificate authorization (CA) for electronic driver's licences. They provide an over-the-counter service for an application for commonly deployed mobile phone platforms. The application is able to receive, store, validate, and present the electronic driving licence as a digital certificate with additional biometric data such as a picture of the driver or fingerprints. The application connects via internet connectivity over a mobile network (e.g. LTE or 5G) or any other network connection (WLAN, BT-Tethering) to the CA.

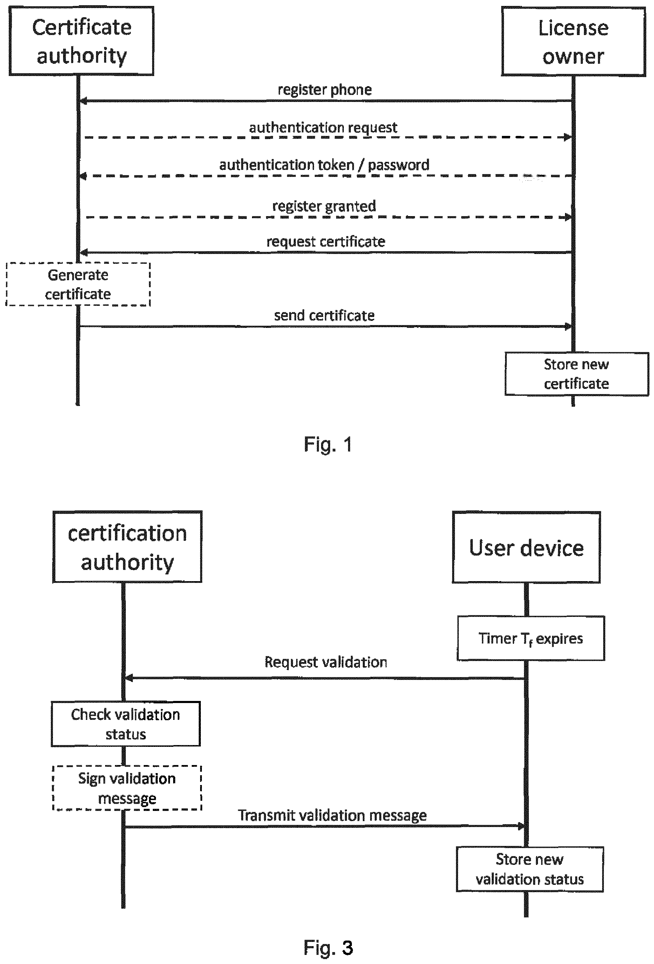

In order to use this new electronic driver's licence service offered by the DMV, the following steps should be performed. The sequence of the resulting messages is shown in Fig. 1.

### 1. The user having downloaded and installed the driver's licence application, the user, or licence owner, registers it with the DMV, or CA.

The registration is initiated by the phone contacting the certificate authority's server requesting the registration.

Optionally but recommended, the user has to authenticate towards the DMV with token or password. The authentication of the user can be done during the registration process or during a following certification request procedure or both. The steps are represented by dashed lines in Fig. 1 to show their optionality.

The DMV Server will authenticate towards the user device using certificates probably already known by the user device through the installed application, i.e. messages from the server are signed, the signature is validated by the user device and no additional messages are necessary.

### 2. The application requests the user's certificate.

In case no valid certificate for this driver exists the DMV will generate one. Optionally (but recommended) biometric data of the driver (such as a picture or a fingerprint) is included in the digital certificate. In case a valid certificate already exists, this step can be omitted, therefore the step of generating the certificate is shown with dashed lines.

### 3. The digital certificate is transferred from the DMV to the mobile phone application of the driver and stored in the phone.

One aspect of this invention is that the owner of a certificate is responsible to ensure that the certificate has been validated recently. The procedure of obtaining a validation message for a specific certificate on a regular basis is called validation update procedure.

In known techniques, the validating entity of a digital certificate is responsible for the validation check of a given certificate by performing a validation procedure such as updating a revocation list (generated by the CA) to the latest version and comparing the certificate ID with this list in order to check whether the certificate has been revoked. Another known method to validate a certificate is an online validation request. One possible protocol for this purpose is the X.509 internet Public Key Infrastructure Online Certificate Status Protocol (OCSP) standardized by the IETF.

The validation update procedure provided by the present invention is a shift of the task of validation from the validating entity to the owner of the certificate. The principle of revocation of a digital certificate has not been changed, but in the present procedure the validation may be performed periodically in preparation of a subsequent authorization procedure.

There are two different validation update procedures to update the validation messages:
1. Poll method: The owner of the certificate is periodically requesting a validation of his own certificate. The digitally signed response to this request (called validation message) is associated with the digital certificate and stored.
2. Push method: The certification authority is periodically pushing a digitally signed validation status report (called validation message) to the device of the owner of the certificate. The periodicity may be set based on the owner's preference or based on the CA's preference or both. The message is associated with the digital certificate and stored.

### The poll method

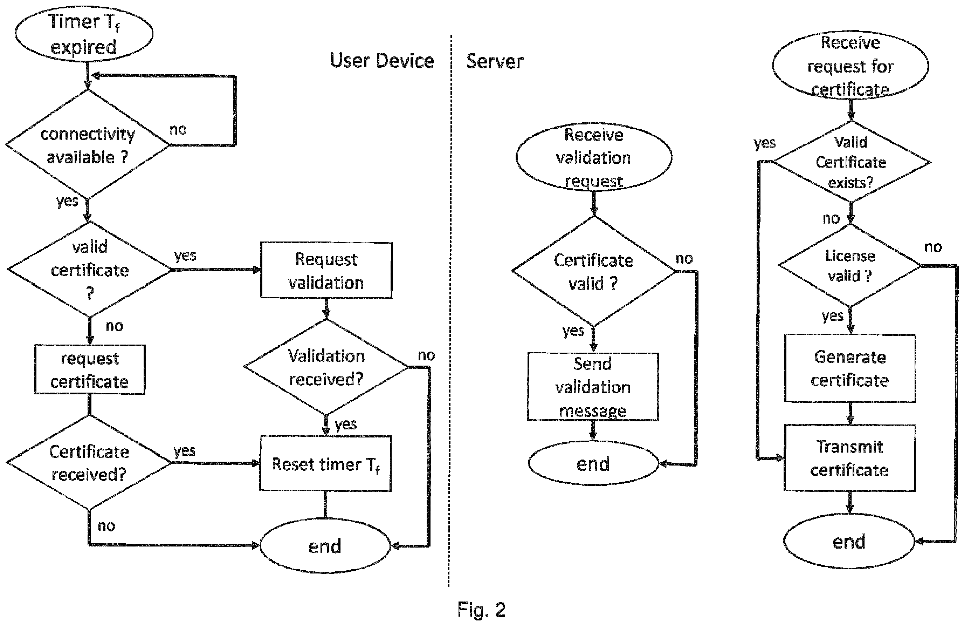

The poll method for updating the validity is shown in Fig. 2 as block diagrams for procedures executed on the user device and the server of the certification authority. On the user device side, to ensure the validity of the stored certificate has been proven within a limited time period, the user device has a timer running. The timer may be a default value or set by the user. When the timer expires this indicates to the user device that it is time to re-validate the stored certificate.

The expiration time for the timer is called T_{f} (f = "fresh"), sensible values may be between 24 hours (re-validation once a day) and 7 days (re-validation once a week). Once T_{f} expires, the device checks and potentially waits for a suitable network connectivity.

If network connectivity is given, the validity period of the stored certificate is checked. If the certificate is not valid any more, a re-validation does not make sense and the user device will request the certification authority to issue a new certificate with a new validity period. If the current date is within the stored certificate's validity period, the user device will request re-validation from the certification authority.

Once a requested new certificate or a validation message has been received, the timer T_{f} is reset to ensure the validation is again triggered next period and the procedure ends. If either a new certificate or a validation is requested and an appropriate answer is not received from the certification authority, the procedure ends.

On the server side, a request for validation will lead to a check whether the certificate is still valid, e.g. by looking-up a revocation list or checking the existence of certificate data, and transmission of a signed validation message in case it is valid. A request for a certificate will lead to a check whether a valid certificate exists. If it does not, the base for the certificate, which is the driver's licence of the user, is checked for validity and if positive a new certificate is generated. The certificate, whether newly generated or an already existing one, is then transmitted to the user device.

One example of a pull method is also shown as a message sequence chart in Fig. 3. In the user device the timer T_{f} expires and a validation is requested from the certification authority. The certification authority checks the validation of the respective certificate and generates and optionally signs a validation message that is then transmitted back to the user device for storage and further usage.

### The push method

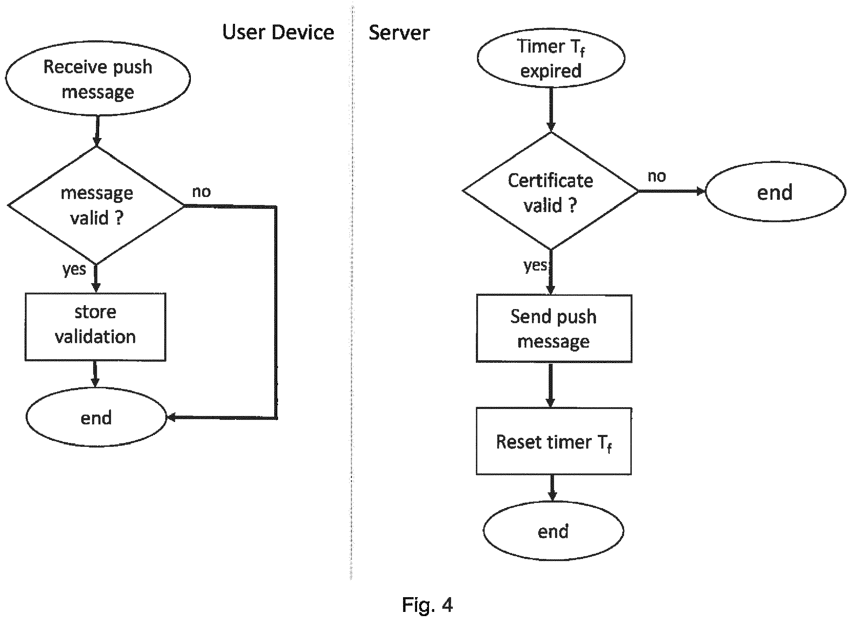

The push method for updating the validity is shown in Fig. 4 as block diagrams for procedures executed on the user device and the server of the certification authority. The method is based on the server to regularly push a new validation message to the user device. Therefore, the server has a timer T_{f} running for the user device or for all devices of the user. The timer expires when it is time to send a new validation message and the certificate is checked for validity. If the certificate is valid the validation message is pushed to the user device and the timer is reset. There are many push mechanisms that can be used, e.g. Apple push, and the service will ensure the message is actually transmitted to the phone once the phone connects to the internet. The mechanism is well known and not described in detail herein.

On the user device side, the push method is very simple compared to the poll mechanism. Whenever a validation message is successfully received the validation data is stored in association with the stored certificate.

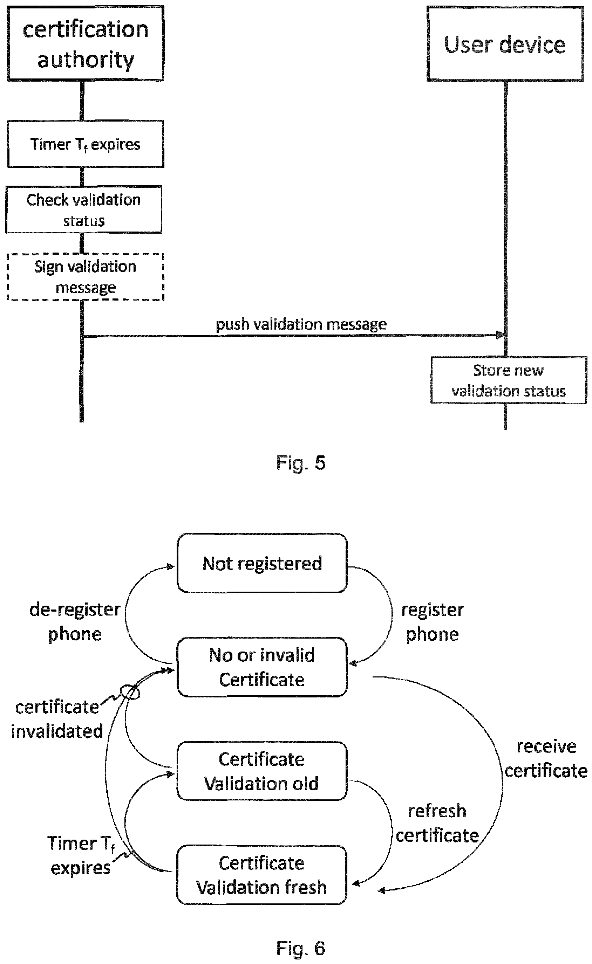

The push method is also shown in a message sequence chart in figure 5. When the timer T_{f} expires in the certification authority's server, the validation status of the respective certificate is checked, a validation message is generated and signed and then pushed to the user device. When the message is successfully received in the user device it is stored for further usage.

One of the benefits of the push method compared to the poll method is that the server can set the transmission time of validation messages. It is possible for the server to spread transmissions so that at no point in time the server's compute or network resources are exceeded. The poll method bears the risk of too many user devices requesting an update at the same time. However, the poll method has the benefit of a fairly simple server implementation as there is no need to have a permanent user device specific procedure running.

It is possible to combine poll and push methods in the validation update procedure, e.g. a periodic push method may be used and an on-demand validation poll is used whenever the push update does not provide a fresh-enough validation.

Fig. 6 shows a diagram with the possible states of a certificate in the entity holding the certificate for presentation, e.g. the user device or smart phone. When the respective application is not installed or not registered at the certification authority, there is no context in the device representing the certificate ("Not registered"). Registration of the device (potentially including authentication of the user) will lead to state still without certificate ("No or invalid certificate"), yet with the authorization to exchange messages between user device and server.

Reception of a valid and by definition fresh certificate brings the user device to the state that is the aim of the validation procedure ("Certificate Validation fresh"). Once the timer T_{f} expires, the state is changes ("Certificate Validation old"). In this state the UE (with poll method) will try to refresh the validation, which changes the state back ("Certificate Validation fresh"). If the certificate itself (not only the validation message) is invalidated, e.g. by revocation of the certificate or exceeding the validation period, the state is changed back to "No or invalid Certificate". A de-registration will lead to the basic state ("Not registered").

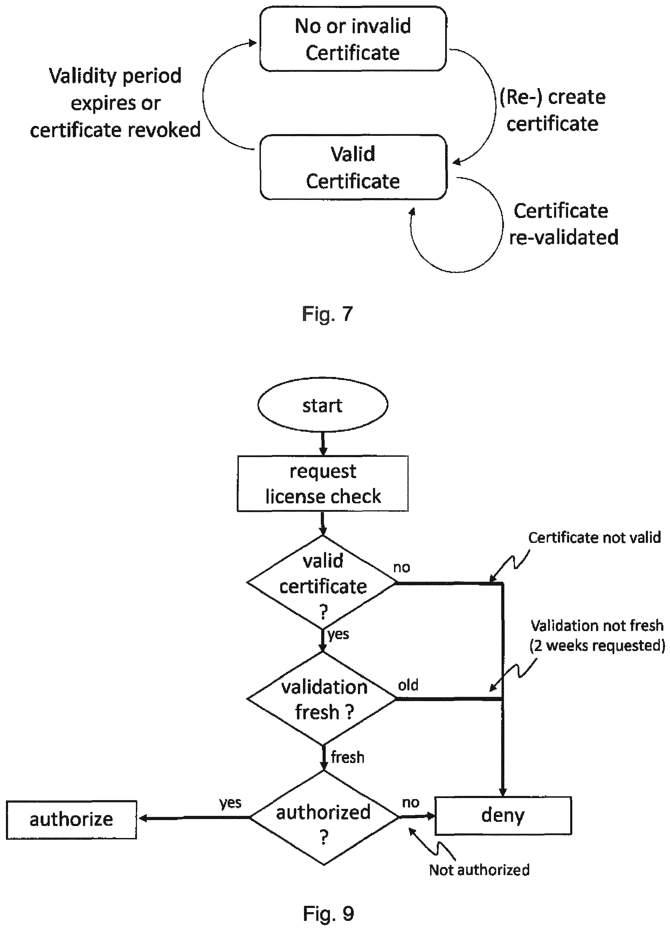

Fig. 7 shows the states of a certificate on the certification authority or server side. Either there is no valid certificate ("No or invalid certificate") or a valid certificate is present ("Valid certificate"). The states are changed whenever a certificate is created or invalidated, e.g. by expiration of the validity period of the certificate. Reception of a validation request will not change the state as it only results is a confirmation of the current validity of the existing certificate.

In general, the following alternatives exist for presenting the certificate, e.g. certifying a driver's licence.

The electronic driver's licence can be displayed on the display of the phone. The benefit of presenting it optically on the display is that it is human readable. In order to prevent a simple replay attack (e.g. by presenting a screen shot as a picture instead of the electronic driver's licence application), the digital signature of the electronic driver's licence and the digital signature of the validation message has to be machine readable so that a supporting device can verify the picture for the human. One example of displaying a digital certificate on the display of a phone in a human and machine readable way is to add a QR-code to the licence. The QR-code is readable by a dedicated QR-code reader or within an application for a smartphone. The DMV (in this embodiment) could deploy a validation application to the authorities and other interested parties like e.g. car rental companies.

The electronic driver's licence could be presented digitally and via radio technology. The certificate and the signed validation message could be transferred from the driver's phone to a validating entity machine using short range radio technology like RFID, Bluetooth, or WLAN or using cellular radio technology like GSM, UMTS, LTE, 5G. The benefit of using a radio interface is that the device of the validating entity could be low-cost, small size, and simple; e.g. without camera or display. Another benefit of using cellular radio technology or internet connectivity is the possibility to validate an electronic driver's licence over a long distance e.g. validation via the internet.

The presentation could be also any possible combination of the latter two methods.

If the digital certificate has included biometric data of the driver, the biometric could be checked by the validating entity. For example, a police officer could use a transportable fingerprint scanner or a vehicle could use a camera in combination with face recognition software. If the electronic driver's licence is presented to a human a picture of the driver could be verified easily without any additional hard- or software. An additional signature may be included in the data to ensure the picture is no fake, as a simple picture overlaid over the certificate could trick humans as well as machines very easily.

When the licence is supposed to be presented by the user using his user device, the latest validation message is presented together with the digital certificate itself during presentation of the digital certificate. The validation message contains the signed date of the respective validation. This is to enable the validating entity to check that the presented certificate has not been revoked by the CA before the latest validation message was generated. This inventive method is especially beneficial if the validating entity has temporarily or permanently no internet connectivity.

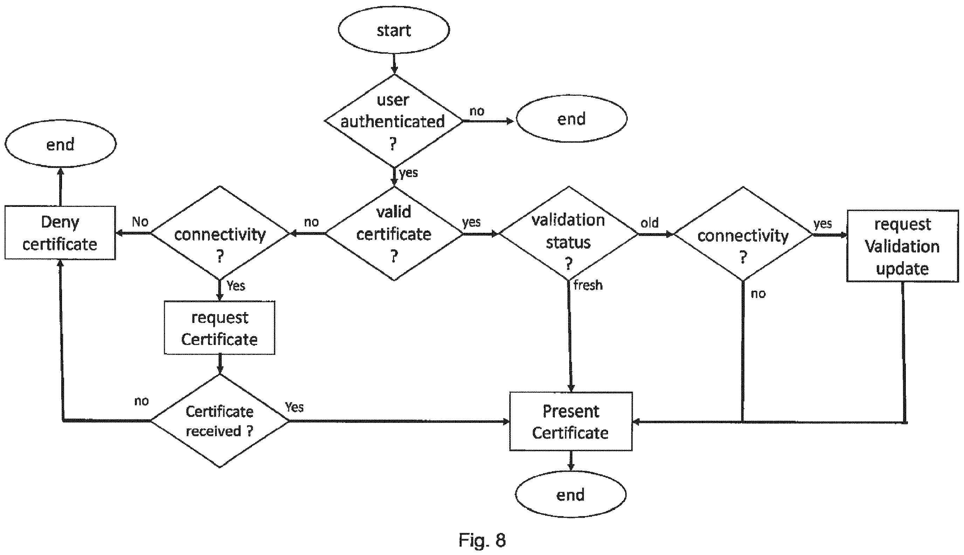

The procedure for presenting the licence, i.e. presenting the certificate, is depicted in Fig. 8 as a block diagram.

When the driver needs to present the electronic driver's licence either to a human (e.g. a police officer) or a machine (e.g. a vehicle or a rent-a-car vendor machine), he starts the application on his phone. Optionally but recommended, the driver has to authenticate himself to the phone (by entering a PIN or via a fingerprint scan or any other authentication method the phone offers). The authentication is beneficial in case the phone is lost or has been stolen. Especially in case there is no biometric data included in the digital certificate this additional step becomes essential. From a security perspective biometric data included to the certificate is preferred.

The application checks whether there is a digital certificate stored and if the stored certificate is valid (e.g. not expired or signature failure). In case there is no valid certificate stored and there is no internet connectivity, the application will not present the driver's licence. If there is internet connectivity a request for a valid certificate is send to the DMV. After receiving a certificate, it is stored and presented and the procedure ends. The last step assumes that newly generated certificates are under all circumstances fresh and do not need additional validation. However, to have aligned or common procedures it may be foreseen to always request a validation message including a validation date, even for a new certificate. As an alternative to ending the procedure after receiving the certificate, a validation message could be requested or it could be automatically sent with the new certificate. Then the procedure in Fig. 8 would contain an additional step (not shown) of storing the validation message. This additional step will not be included in further description but should be understood as an alternative where appropriate after or during transmission of a certificate to the user device in following descriptions.

If there is a valid certificate stored, the application checks how old the last stored validation message is. If the last stored validation message is older than a preconfigured period of time T_{f} ("T-fresh") and a connection to the DMV server is available, the application will send a validation update request message to the validation server as described in more detail above. According to one aspect of the present invention, the certificate is then presented with the current validation status, potentially updated as a result of the requested procedure, and the procedure ends.

In case the last stored validation message is not older than T_{f} or there is no internet connectivity during the process of presenting the electronic driver's licence the digital certificate and the last stored validation message is presented and the procedure ends.

The same procedure from the validator's, e.g. the car's or the police officer's, point of view is shown in figure 9. The validator requests a licence check and receives a certificate with validation data. If the certificate is valid according to the signature check and validity period and the last update of its validity are fresh (in the definition of the validator which may differ from the user device's definition) the authorization is checked. According to a further aspect of the present invention, this check compares additional information contained in the certificate, e.g. name of the driver or allowed vehicle classes, against the current authorization. The current authorization may be a whitelist or an actual vehicle class. If all the checks have a positive result, the validation is finally positive. All other cases lead to a denial of the requested service.

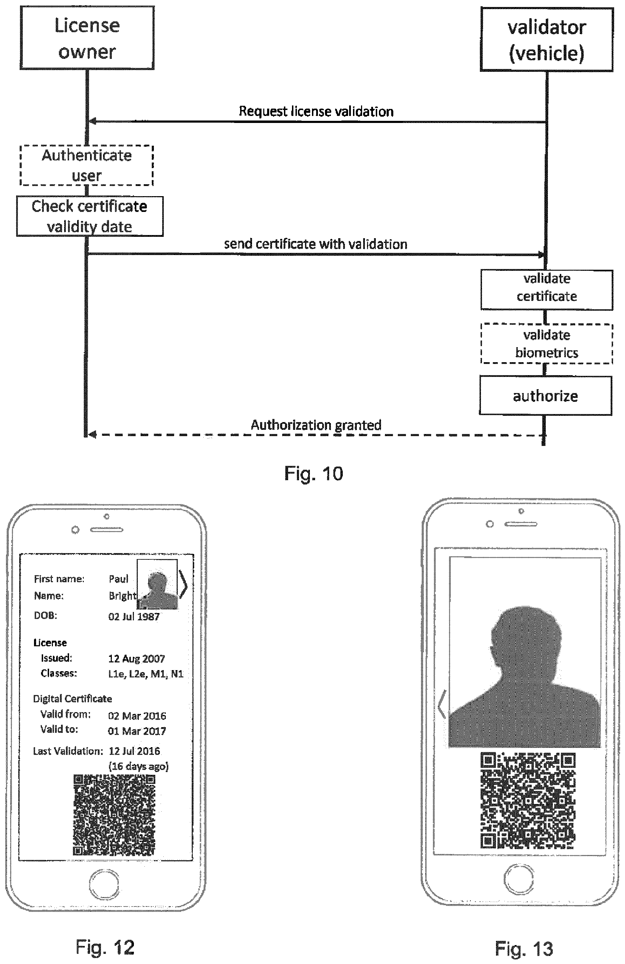

Fig. 10 depicts an example of a message flow for the above procedure in a sequence chart between the certification authority, the licence owner, e.g. the driver, and the validator, e.g. the vehicle. The procedure is started by the validator requesting a licence validation from the licence owner. The licence owner may authenticate the current user (optional and shown in dashed lines) to ensure no other user takes advantage of the licensing procedure. Next the licensing owner will check whether the certificate used to validate the licence is fresh according to the licence owner's definition.

The certificate is then transmitted to the validator together with data from the latest validation. The owner checks the certificate for validity, i.e. he verifies the signature and validity period. In addition, the freshness of the validity prove is checked against the validator's definition which may differ from the owner's definition of fresh. Fig. 10 shows example wise a positive validation. The validator will perform a check of biometric data to ensure the user of the user device is the one authenticated by the certificate, e.g. by comparison of biometric data with data from a fingerprint sensor (e.g. in the car) or from face recognition entity connected to a video camera. In case of a human user of a validation machine the biometric data may be presented and the check may simply be the face recognition by the user. Once the check is also positive the user is authorized according to the respective authorization information which may include a white list of names or vehicle classes etc. The licence owner may be informed about the authorization.

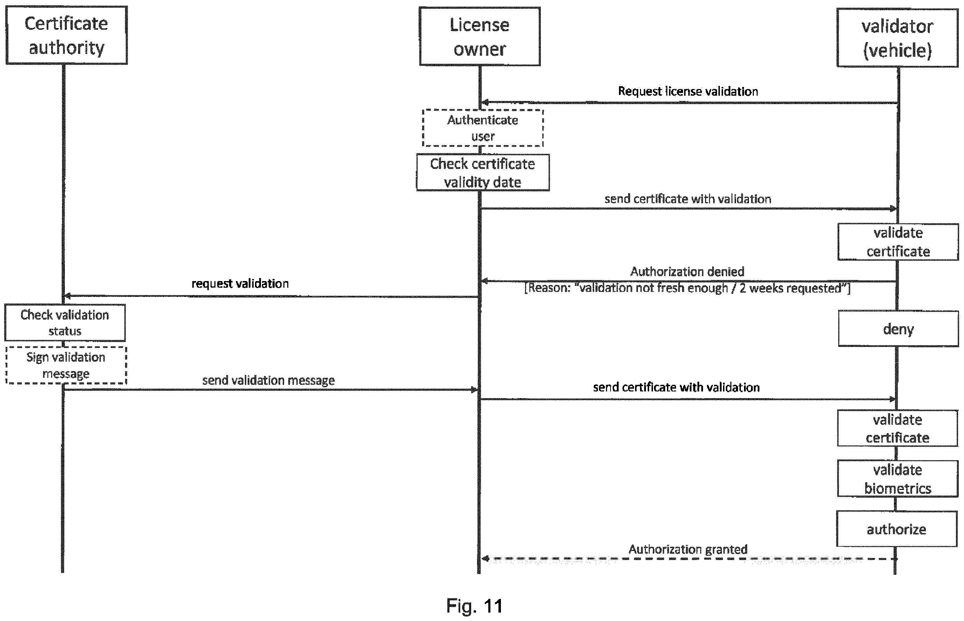

Fig. 11 shows example wise the case that after reception of the certificate and validation information the validator decides that the certificate's validity prove is not fresh enough, e.g. a maximum age of 14 days may be allowed while the licence owner may update only every 4 weeks and in the actual example the certificate may be validated 21 days ago.

The validator informs the licence owner about the denial of the authorization and the reason. The licence owner will now update the validity information by requesting validation from the certification authority. The authority checks the validity of the certificate, generates a message that proves validity, signs the message (optionally, therefore dashed lines) and sends back the signed validation message.

The licence owner will then re-send the certificate with the updated validity information and the validator will determine freshness and validate biometric data as above. Then the owner is authorized by the validator and the licence owner may be informed about the authorization.

The above description shows the certificate of a licence holder or in general a certificate of a user of a user device being generated including the validity period and signed by a certification authority.

The same certification authority is described to perform the (regular) update of the certificate validation, either on request of the user device (poll) or by regularly pushing the information (push).

It may well be that the two procedures, certificate generation and certificate validation, are performed by different physical entities. Actually, it is a benefit of the current invention to allow an easy separation of the functions into different entities being optimized for each of these functions. In one example, the certification authority may be responsible for generation and revocation of certificates. The certification authority has knowledge about the licence, the owner, his biometrical data and validity of a certificate and its servers may be optimized from security point of view. A validation update entity may be authorized by the certification authority to perform the (regular) validation update in push and / or pull mode. This entity has a key to sign the validation update message and otherwise only needs to know which certificates are currently valid, however the entity may be optimized to answer a high number of validation update messages in short time. The certification authority may inform the validation update entity about generated and revoked certificates. It may ensure this information is always up-to-date in the validation update entity so that the validation update entity can at any time update certificate validation information with a simple lookup mechanism in a list of generated certificates to check whether a to-be-validated certificate exists and lookup the same certificate in a revocation list to check whether the certificate has been revoked. Based on the two lookup mechanisms (which may be implemented as a single lookup in a combined list only containing valid / unrevoked certificates) the validation update entity can answer to validation requests without involving the actual certification authority. The advantage of a split of functionality is that the actual authority can be present in only one or a few physical entities (servers) being very securely build and maintained while the validation task is spread over a high number of entities which only need to keep the lookup tables and mechanisms secure. The present invention should explicitly allow any kind of functional split between a certification authority and validating update entities.

Fig. 12 shows a human readable presentation of a certificate with a latest validation date in addition to and different from the validity period being imprinted on the certificate.

The licence owner, here named user, may have a user device, e.g. a smart phone. When a licence validation is due, e.g. when entering a car as a potential driver, the smart phone may authenticate the user by legacy means, e.g. a PIN or fingerprint check (not shown). After that, on the screen information from the certificate appears, i.e. name, date of birth, the actual licence information containing licenced vehicle classes etc. In addition to the information from the certificate, the latest validation information is presented, in the example as a date.

The screen also contains data that enables a verification of the certificate and the validation data by the validator. In Fig. 12 this information is contained in a QR code so that a human validator who is supported by a validation device can validate the correct signature of the validation data and its relation to the original certificate verifying the actual licence data. The QR code can be read by the supporting device and the signature plus some or all of the information contained can be verified by the device.

The presentation of the certificate data may also include biometric data like a picture. If intended for validation by a human, the biometric data will be very important, especially pictures are much faster to verify by a human against the looks of a person than a textual description.

To ensure the picture is not faked, it may be signed with a so called perceptual signature. This kind of signature is a finger print of a picture that can be used to validate similar pictures that are not bit-identical to the original. Such a signature is shown as an example coded again as QR code in Fig. 13 which is meant to show a second screen on the display of the smart phone. This second screen can be reached from the first screen in Fig. 12 by swiping from the small picture at the top right to the left. The appearing screen shows a bigger resolution of the same picture together with its perceptual signature encoded in a QR-code. A verification of the picture is possible using a supporting machine that takes a picture of the licence holder's photo and the QR code. The picture of the photo will never be bit-identical to the digital representation of the photo in the certificate, therefore it cannot be verified against a bit-exact digital signature as the rest of the licence holder's information, e.g. name, DOB and vehicle class. A perceptual signature will allow verification based on the picture of the photo, nevertheless.

In the human validator case, the fact that a verification of the presented textual data and the picture of the licence owner is possible can suffice to prevent fake of the information. However, in most cases a human validator, e.g. a police officer, will trust the presented information.

If the validator is a machine without human interaction during the validation process, e.g. a car verifying the name, biometric data and vehicle class of the potential driver, the certificate is provided or presented in a purely digital form. The validator can check the signature to ensure all information provided is correct and then perform authorization, e.g. against white lists etc.

To use biometric data, e.g. fingerprint or picture information, it will use contained images or fingerprint information. The transmitted picture of the licence owner can be signed together with the other certificate information as the transmitted pictures is the original bit-representation (i.e. no presentation on a screen of the user device and picture taken by the camera of the validator's supporting device will corrupt the bits). However, a perceptual signature of the image can still be used by the validator to validate a camera picture of the user (or his fingerprint) without having to generate perceptual data from the picture itself for face recognition.

This invention describes procedures performed by licence holders, their devices, validation entities and certification authorities potentially supported by validation update entities. The description herein is meant to describe all aspects of a system for performing the inventive procedures. As currently, electronic licences stored and presented on user devices, are already discussed in public, the steps meant to be inventive are summarized in the following.

The base idea:
The entity storing the certificate for presentation (all of the steps below) having a certificate stored that has a validity period or a validity date (end date of a validity period);
receiving validation update information confirming the validity of the unchanged certificate, including
   a date / time information of the confirmation being different from the validity (end) date, and
   a signature ensuring the integrity and the originator of the confirmation data; and
storing the validation update information in association with the certificate stored; and
presenting, on request by a validation entity,
   information from the certificate together with the date / time information from the validation update information, and signature information ensuring the integrity and the originator of the confirmation data being associated with the certificate.

Further aspects of the invention:
The entity storing the certificate for presentation (any of the steps below in addition)
   receiving the validation update information timewise independently of a validation entity requesting a certificate from the entity storing the certificate. receiving the validation update information regularly with a predefined periodicity in preparation of a validation entity requesting a certificate in future.
   receiving the validation update information in return to a request (poll) for such information sent regularly to a validation update entity. receiving the validation update information regularly from a validation update entity (push) as a result of allowing the validation update entity to send such information.
   presenting the information above on a screen of a user device, including textual information in a human readable manor, and biometrical information in a human readable manor, and signature information in a machine readable manor.
   presenting the information above digitally to a validation entity being a machine.
   requesting validation update information from a validation update entity in return of receiving a denial message from a validation entity to which the information above was presented digitally.
The validation update entity periodically (*)
   checking the validity of a certificate, and
   generating a validity update message confirming the validity of the unchanged certificate, the message comprising
      a date / time information of the confirmation, and
      a signature ensuring the integrity of the message; and
   transmitting the validity update message to the entity storing the certificate for presentation; or
   transmitting the validity update message to multiple entities having the certificate stored for presentation.
   (*) A validation entity sending single validation confirmations on request by an entity is part of the OSCP mentioned under prior-art above.
The validation entity (if a machine) (all of the steps below)
   receiving certificate information including
      information identifying a person, and
      a validity period or a validity date (end of validity period), and authorization information authorizing the person to do a specific task, and
      a signature ensuring integrity and originator of the certificate; and receiving validation update information confirming the validity of the certificate, including
      a date / time of the confirmation being different from the validity date, and
      a signature ensuring the integrity and the originator of the validation update information; and
   verifying the validity of the certificate; and
   verifying freshness of the validity update information; and in case both verifications were positive, authorizing the person according to the authorization information; or
   denying authorization of the person and informing and entity about the denial.
The supporting device
   taking a picture of an on-screen presentation of
      information from a certificate together with the date / time information from a validation update information, and signature information ensuring the integrity and the originator of the confirmation data being associated with the certificate.
      verifying the validity of the certificate; and
      verifying freshness of the validity update information; and in case both verifications were positive, confirming to the user of the supporting device the correctness of the on-screen presentation.

Further
The entity storing the certificate for presentation being a smart phone, having an application installed for storage and presentation of a driver's licence of the user of the smart phone.
The validation update entity being a server authorized by a certificate authorization, e.g. the DMV, to perform validation updates without changing the status of the respective certificate.
The validation entity being a car.
The supporting device being a smart phone used by a human validator.

## Claims

1. A method of holding validation information concerning a digital certificate; the method comprising:
storing a digital certificate in a user equipment,
performing a validation update from time to time, and
storing a validation message generated by the validation update for presentation on demand, the validation message indicating whether the digital certificate is currently valid.

2. The method of claim 1, wherein the validation update is performed in response to a validation update request sent by the user equipment to a certification authority.

3. The method of claim 2, wherein the validation update request is sent periodically.

4. The method according to claim 2 or claim 3, wherein the validation update request includes identification information relating to a user of the user equipment.

5. The method of claim 1, wherein the validation update is performed periodically by a certification authority.

6. The method according to claim 5, wherein the validation update is performed with a periodicity determined by information received from the user equipment.

7. The method according to any one of claims 1 and 5 to 6, wherein the validation message is pushed to the user equipment.

8. The method according to any preceding claim, wherein the validation message is a machine-readable message, preferably a bar code, more preferably a two-dimensional bar code.

9. The method according to any preceding claim, wherein the digital certificate is a driving licence.

10. A method for determining a person's authorization to perform a task, the method comprising:
determining whether the person is in possession of a digital certificate relating to the task; and
determining whether the person is in possession of a current validation message for the digital certificate.

11. The method according to claim 10, wherein the digital certificate is a driving licence and wherein the task is that of driving a vehicle of a particular class.

12. The method according to claim 10 or claim 11, wherein the digital certificate is stored in a user equipment under control of the person.
